# EUROPÄISCHE PATENTSCHRIFT

(11) **EP 1 877 825 B1**
(45) Veröffentlichungstag und Bekanntmachung des Hinweises auf die Patenterteilung: **03.09.2014**
(21) Anmeldenummer: 06753427.1
(22) Anmeldetag: 27.04.2006
(51) Int. Cl.: G01S 13/36, G01S 13/93

(54) **VERFAHREN UND VORRICHTUNG ZUR BESTIMMUNG EINES ABSTANDS ZU EINEM ZIELOBJEKT**
METHOD AND DEVICE FOR DETERMINING A DISTANCE TO A TARGET OBJECT
PROCEDE ET DISPOSITIF POUR DETERMINER UNE DISTANCE PAR RAPPORT A UN OBJET CIBLE

(30) Priorität: 04.05.2005 DE 102005021882
(43) Veröffentlichungstag der Anmeldung: 16.01.2008
(73) Patentinhaber: Valeo Schalter und Sensoren GmbH, 74321 Bietigheim-Bissingen (DE)
(72) Erfinder: KÜNZLER, Frank, 76703 Kraichtal (DE); HABERLAND, Udo, 71088 Holzgerlingen (DE); REHNER, Robert, 90451 Nürnberg (DE); WEINZIERL, Jochen, 90449 Nürnberg (DE); SCHMIDT, Lorenz-Peter, 91093 Heßdorf (DE)
(74) Vertreter: DREISS Patentanwälte PartG mbB
(86) Internationale Anmeldenummer: PCT/EP2006/003910
(87) Internationale Veröffentlichungsnummer: WO 2006/117125

(56) Entgegenhaltungen:
- WO-A-2004/025322
- US-A- 5 162 862
- US-A- 5 400 034
- US-A- 5 844 519
- US-A- 6 115 114
- US-A- 6 121 915
- JENSEN J F; RAGHAVAN G: "Bandpass delta-sigma modulators for direct IF and RF sampling digital receivers implemented in InP HBT IC technology", IEE CONFERENCE PUBLICATION: THIRD INTERNATIONAL CONFERENCE ON ADVANCED A/D AND D/A CONVERSION TECHNIQUES AND THEIR APPLICATIONS, no. 466, 28 July 1999 (1999-07-28), - 28 July 1999 (1999-07-28), pages 34-37, XP006501499, UK ISSN: 0537-9989, DOI: 10.1049/CP:19990457 ISBN: 978-0-85296-718-8
- EARL G F; WHITINGTON M J: "HF radar ADC dynamic range requirements", IEE CONFERENCE PUBLICATION: THIRD INTERNATIONAL CONFERENCE ON ADVANCED A/D AND D/A CONVERSION TECHNIQUES AND THEIR APPLICATIONS, no. 466, 28 July 1999 (1999-07-28), - 28 July 1999 (1999-07-28), pages 101-105, XP008145558, UK ISSN: 0537-9989

## Beschreibung

Die Erfindung betrifft ein Verfahren zur Bestimmung eines Abstands zu einem Zielobjekt, bei dem elektromagnetische Wellen in Form eines Sendesignals von einem Sender ausgesandt werden und bei dem mindestens ein Teil des an dem Zielobjekt reflektierten Sendesignals in Form eines Empfangssignals von einem Empfänger empfangen wird, und bei dem eine Auswertung des Empfangssignals in Abhängigkeit von einem Referenzsignal erfolgt, wobei das Referenzsignal eine bekannte Phasendifferenz zu dem Sendesignal und dieselbe Frequenz wie das Sendesignal aufweist.

Die Erfindung betrifft ferner eine Vorrichtung zur Bestimmung eines Abstands zu einem Zielobjekt nach dem Patentanspruch 10.

Verfahren und Vorrichtungen dieser Art sind bekannt und verwenden eine durch die unterschiedlichen Signalweglängen des Sende- bzw. Empfangssignals einerseits und des Referenzsignals andererseits verursachte Phasendifferenz zwischen dem Empfangssignal und dem Referenzsignal, um den Abstand zu dem Zielobjekt zu ermitteln. Der Eindeutigkeitsbereich einer derartigen Abstandsbestimmung liegt hierbei allerdings nur innerhalb einer Wellenlänge des verwendeten Empfangssignals. US 5,162,862 offenbart ein Verfahren dieser Art.

Bei einem weiteren bekannten Verfahren wird ein Sendesignal mit ansteigender Frequenz, ein sog. chirp-Signal, ausgesandt, und mit einem entsprechenden, an einem Zielobjekt reflektierten Empfangssignal korreliert. Die Differenzfrequenz beider Signale ist proportional zu dem Abstand des Zielobjekts. Besonders nachteilig an diesem Verfahren ist die geringe Ortsauflösung bei der Ermittlung des Abstands des Zielobjekts, die bei einer Frequenz des Sendesignals von etwa 24 GHz und bei einer chirp-Bandbreite von etwa 200 MHz nur etwa 0,75 m beträgt. Bei einer typischen Auswertung im Spektralbereich lassen sich Ortsgenauigkeiten im DezimeterBereich erzielen. Für viele Nahbereichs-Anwendungen, insbesondere zur Abstandsdetektion im Kraftfahrzeugbereich, ist eine derartig geringe Ortsauflösung und Ortsgenauigkeit ungeeignet.

Demgemäß ist es Aufgabe der vorliegenden Erfindung, ein Verfahren und eine Vorrichtung der eingangs genannten Art dahingehend zu verbessern, dass sowohl der Eindeutigkeitsbereich als auch die Ortsauflösung bzw. Ortsgenauigkeit bei der Abstandsbestimmung verbessert werden ohne gleichzeitig die Komplexität einer dazu erforderlichen Vorrichtung zu steigern.

Diese Aufgabe wird bei einem Verfahren der eingangs genannten Art erfindungsgemäß dadurch gelöst, dass die Frequenz des Referenzsignals und des Empfangssignals in einem Frequenzteiler unter Beibehaltung einer zwischen dem Referenzsignal und dem Empfangssignal bestehenden Phasendifferenz um denselben vorgebbaren Teilerfaktor verringert wird, um ein frequenzreduziertes Referenzsignal und ein frequenzreduziertes Empfangssignal zu erhalten, und dass die Phasendifferenz zwischen dem frequenzreduzierten Referenzsignal und dem frequenzreduzierten Empfangssignal ausgewertet wird, um den Abstand zu bestimmen.

Durch die erfindungsgemäße Reduktion der Frequenz des Empfangssignals und des Referenzsignals um den vorgebbaren Teilerfaktor ergibt sich eine dem Teilerfaktor entsprechende Vergrößerung der jeweiligen Wellenlängen des Empfangssignals und des Referenzsignals, wodurch sich der Eindeutigkeitsbereich hinsichtlich der Abstandsbestimmung ebenfalls vergrößert. Dadurch kann mittels der Auswertung der Phasendifferenz zwischen dem frequenzreduzierten Referenzsignal und dem frequenzreduzierten Empfangssignal eine gegenüber dem Stand der Technik verbesserte Abstandsbestimmung durchgeführt werden.

Bei einer vorteilhaften Ausführungsform des erfindungsgemäßen Verfahrens wird das Empfangssignal verstärkt, bevor es dem Frequenzteiler - in Form eines verstärkten Empfangssignals-zugeführt wird. Durch diese Maßnahme wird ein Dynamikbereich bei der Verarbeitung des Empfangssignals vergrößert, wodurch sich eine entsprechende Vergrößerung des zu erfassenden Abstandsbereichs ergibt.

Besonders zweckmäßig ist bei einer weiteren Ausführungsform der vorliegenden Erfindung vorgeschlagen, das Empfangssignal und/oder das Referenzsignal in ein Digitalsignal zu wandeln, wodurch sich eine einfache Weiterverarbeitung des jeweiligen Signals und eine geringere Störanfälligkeit gegenüber einem Analogsignal ergibt. Zur Wandlung kann beispielsweise ein Schmitt-Trigger oder ein Komparator verwendet werden. Entsprechend schnelle Bauteile sind bei geringen Teilerfaktoren, bei denen auch die bereits frequenzreduzierten Signale immer noch Frequenzen im Gigahertzbereich aufweisen, beispielsweise aus dem Gebiet der optischen Nachrichtentechnik erhältlich.

Eine Umwandlung des Empfangssignals und/oder des Referenzsignals in ein Digitalsignal ist insbesondere vor der erfindungsgemäßen Frequenzteilung sehr vorteilhaft, weil in diesem Fall der Frequenzteiler besonders einfach ausgebildet sein kann. Beispielsweise kann bei dieser Erfindungsvariante ein einfacher Binärzähler als Frequenzteiler verwendet werden.

Nach der erfindungsgemäßen Frequenzteilung kann aus dem frequenzreduzierten Referenzsignal und dem frequenzreduzierten Empfangssignal mittels eines Phasenkomparators eine zu der Phasendifferenz zwischen dem frequenzreduzierten Referenzsignal und dem frequenzreduzierten Empfangssignal proportionale Ausgangsspannung erhalten werden.

Diese Ausgangsspannung kann ihrerseits, z.B. mittels eines Analog-/Digital-Wandlers digitalisiert werden und anschließend einer Recheneinheit zur weiteren Verarbeitung zugeführt werden. Insbesondere wird die Ausgangsspannung zur Ermittlung des Abstands des Zielobjekts ausgewertet, was beispielsweise durch einen Mikrocontroller oder einen digitalen Signalprozessor (DSP) erfolgen kann.

Bei einer hinreichend großen Verarbeitungsgeschwindigkeit der Recheneinheit, z.B. im Falle eines schnellen DSPs, oder bei einem hinreichend großen Teilerfaktor des Frequenzteilers, ist es auch möglich, die als Digitalsignale vorliegenden Empfangssignale und Referenzsignale direkt entsprechenden Eingängen des DPSs zuzuführen, der die Signale beispielsweise interruptgesteuert periodisch abtastet und rechnerisch ihre Phasendifferenz ermittelt, wodurch sich ein separater Phasenkomparator erübrigt.

Eine weitere Variante des erfindungsgemäßen Verfahrens ist dadurch gekennzeichnet, dass das Sendesignal und/oder das Referenzsignal mittels eines auch als VCO (voltage controlled oscillator) bezeichneten elektrisch abstimmbaren Oszillators erzeugt wird. Die Signalfrequenz wird hierbei insbesondere in Abhängigkeit einer dem Oszillator zuführbaren Eingangsspannung ausgewählt bzw. eingestellt.

Bei einer weiteren sehr vorteilhaften Erfindungsvariante werden innerhalb einer zur Abstandsbestimmung verwendeten Vorrichtung auftretende unterschiedliche Weglängen des Sendesignals und/oder des Empfangssignals und/oder des Referenzsignals und/oder sonstige, insbesondere von einem zur Verstärkung des Empfangssignals vorgesehenen Verstärker hervorgerufene Laufzeitunterschiede der Signale kompensiert. Solche Laufzeitunterschiede können beispielsweise aufgrund verschiedener Ausbreitungsbedingungen in unterschiedlichen Wellenleitern oder einer Gruppenlaufzeit eines Verstärkers und dergleichen auftreten und sind unerwünscht, da sie die in der Phasendifferenz zwischen dem Empfangssignal und dem Referenzsignal enthaltene Abstandsinformation mit einem Fehler beaufschlagen.

Zur weiteren Steigerung der Präzision des erfindungsgemäßen Verfahrens ist vorgeschlagen, nacheinander mehrere Sendesignale mit unterschiedlichen Frequenzen auszusenden. Beispielsweise reichen zwei Sendesignale unterschiedlicher Frequenz, um den erfindungsgemäß bereits durch die Frequenzteilung um den Teilerfaktor vergrößerten Eindeutigkeitsbereich bei der Ermittlung des Abstands des Zielobjekts aus der Phasendifferenz zwischen dem Empfangssignal und dem Referenzsignal zu vergrößern.

Als eine weitere Lösung der Aufgabe der vorliegenden Erfindung ist eine Vorrichtung gemäß Patentanspruch 10 angegeben. Vorteilhafte Ausführungsformen der erfindungsgemäßen Vorrichtung sind Gegenstand der Unteransprüche 11 bis 16.

Weitere Merkmale, Vorteile und Ausführungsformen der vorliegenden Erfindung sind in der nachstehenden Figurenbeschreibung unter Bezugnahme auf die Zeichnung angegeben, wobei
- Fig. 1: eine Ausführungsform der erfindungsgemäßen Vorrichtung zeigt, und
- Fig. 2: ein vereinfachtes Flussdiagramm einer Ausführungsform des erfindungsgemäßen Verfahrens zeigt.

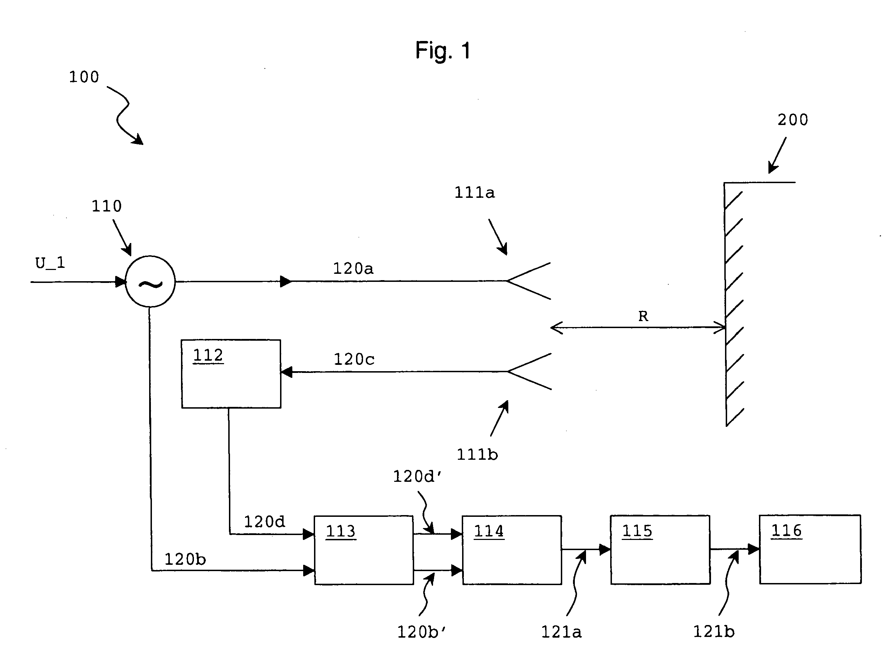

Figur 1 zeigt eine erfindungsgemäße Vorrichtung 100, die zur Bestimmung eines Abstands R zu einem Zielobjekt 200 vorgesehen ist. Hierzu weist die Vorrichtung 100 einen Sender 111a zum Aussenden von elektromagnetischen Wellen in Form eines ihm zugeführten Sendesignals 120a auf. Bei dem Sender 111a kann es sich beispielsweise um eine Hornantenne oder eine Patchantenne handeln. Zur Verstärkung des Sendesignals 120a kann der Sender 111a ggf. auch einen nicht in Figur 1 abgebildeten Hochfrequenzverstärker aufweisen, der der verwendeten Horn- bzw. Patchantenne vorgeschaltet ist.

Der Sender 111a beaufschlagt das in Figur 1 rechts dargestellte Zielobjekt 200 mit dem Sendesignal 120a, von dem mindestens ein Teil an dem Zielobjekt 200 reflektiert und in einem Empfänger 111b empfangen wird. Das in dem beispielsweise ebenfalls eine Horn- oder Patchantenne aufweisenden Empfänger 111b empfangene Signal wird in der weiteren Beschreibung als Empfangssignal 120c bezeichnet.

Das Empfangssignal 120c wird erfindungsgemäß einem Verstärker 112 zugeführt, der an einem Ausgang ein verstärktes Empfangssignal 120d bereitstellt.

Das verstärkte Empfangssignal 120d wird anschließend erfindungsgemäß einem Frequenzteiler 113 zugeführt, der eine Frequenz des verstärkten Empfangssignals 120d um einen vorgebbaren Teilerfaktor x verringert, was an einem Ausgang des Frequenzteilers 113 zu dem frequenzreduzierten Empfangssignal 120d' führt. In gleicher Weise wird dem Frequenzteiler 113 ein Referenzsignal 120b zugeführt, welches - ebenso wie das verstärkte Empfangssignal 120d - eine Frequenzreduktion um denselben Teilerfaktor x erfährt, was zu dem frequenzreduzierten Referenzsignal 120b' führt.

Das Referenzsignal 120b weist eine bekannte und im vorliegenden Fall als verschwindend angenommene Phasendifferenz zu dem Sendesignal 120a und dieselbe Frequenz wie das Sendesignal 120a auf. Daher ergibt sich aufgrund des durch den Abstand R bedingten Weglängenunterschieds 2*R zwischen dem Sendesignal 120a bzw. dem verstärkten Empfangssignal 120d und dem Referenzsignal 120b eine Phasendifferenz zwischen dem verstärkten Empfangssignal 120d und dem Referenzsignal 120b, welche direkt von dem Abstand R zwischen dem Sender 111a bzw. dem Empfänger 111b und dem Zielobjekt 200 abhängt.

Aus dieser Phasendifferenz kann in an sich bekannter Weise unter Kenntnis der Frequenz f_1 des Sendesignals 120a der Abstand R zu dem Zielobjekt 200 ermittelt werden. Bei herkömmlichen Verfahren existiert aufgrund des sinusförmigen Sendesignals 120a allerdings nur ein Eindeutigkeitsbereich für die Ermittlung des Abstands R, der einer Wellenlänge des Sendesignals 120a entspricht.

Zur Vermeidung dieses Nachteils werden bei dem erfindungsgemäßen Verfahren das verstärkte Empfangssignal 120d und das Referenzsignal 120b wie bereits beschrieben jeweils von dem Frequenzteiler 113 um den Teilerfaktor x in ihrer Frequenz reduziert. Ausgehend von einer Frequenz f_1 des Signals 120a, 120c, 120d bzw. des Referenzsignals 120b ergibt sich für das frequenzreduzierte Empfangssignal 120d' bzw. für das frequenzreduzierte Referenzsignal 120b' eine neue Frequenz f_1' = f_1 / x.

Der Frequenzteiler 113 ist erfindungsgemäß so ausgebildet, dass die zwischen dem verstärkten Empfangssignal 120d und dem Referenzsignal 120b bestehende Phasendifferenz durch die Frequenzteilung nicht beeinflusst wird. Das heißt, zwischen dem frequenzreduzierten Referenzsignal 120b' und dem frequenzreduzierten Empfangssignal 120d' existiert nach wie vor dieselbe Phasendifferenz wie vor der Frequenzteilung.

Durch die erfindungsgemäße Frequenzteilung wird vorteilhaft der Eindeutigkeitsbereich bei der Bestimmung des Abstands R um den bei der Frequenzteilung verwendeten Teilerfaktor x vergrößert. Bei einer Wahl des Teilerfaktors von x = 16 ergibt sich beispielsweise sehr vorteilhaft ein ebenfalls um den Faktor x = 16 vergrößerter Eindeutigkeitsbereich gegenüber einer Abstandsermittlung nach herkömmlichen Verfahren.

Das frequenzreduzierte Referenzsignal 120b' und das frequenzreduzierte Empfangssignal 120d' werden, wie aus Figur 1 ersichtlich, einem Phasenkomparator 114 zugeführt, der an seinem Ausgang eine zu der Phasendifferenz zwischen dem frequenzreduzierten Referenzsignal 120b' und dem frequenzreduzierten Empfangssignal 120d' proportionale Ausgangsspannung 121a bereitstellt. Diese Ausgangsspannung 121a wird zur Digitalisierung einem Analog-/Digitalwandler 115 zugeführt, der an seinem Ausgang eine digitalisierte Ausgangsspannung 121b zur weiteren Auswertung durch eine beispielsweise als Mikrocontroller oder DSP ausgebildete Recheneinheit 116 ausgibt. Die Recheneinheit 116 ermittelt hieraus den Abstand R zu dem Zielobjekt 200.

Falls eine zwischen dem Referenzsignal 120b und dem Sendesignal 120a bestehende, systembedingte Phasendifferenz-anders als im vorliegenden Fall - von Null verschieden ist, kann sie rechnerisch herauskalibriert werden, weil sie konstant ist und beispielsweise durch Simulationen bzw. Messungen ermittelt werden kann.

Bei einer besonders vorteilhaften Ausführungsform der vorliegenden Erfindung wird das Sendesignal 120a, ebenso wie das Referenzsignal 120b, durch einen auch als VCO (voltage controlled oscillator) bezeichneten elektrisch abstimmbaren Oszillator 110 erzeugt. Die Frequenz des Sendesignals 120a bzw. des Referenzsignals 120b wird hierbei durch geeignete Wahl einer dem VCO 110 zugeführten Eingangsspannung U_1 eingestellt, was beispielsweise ebenfalls durch die Recheneinheit 116 erfolgen kann.

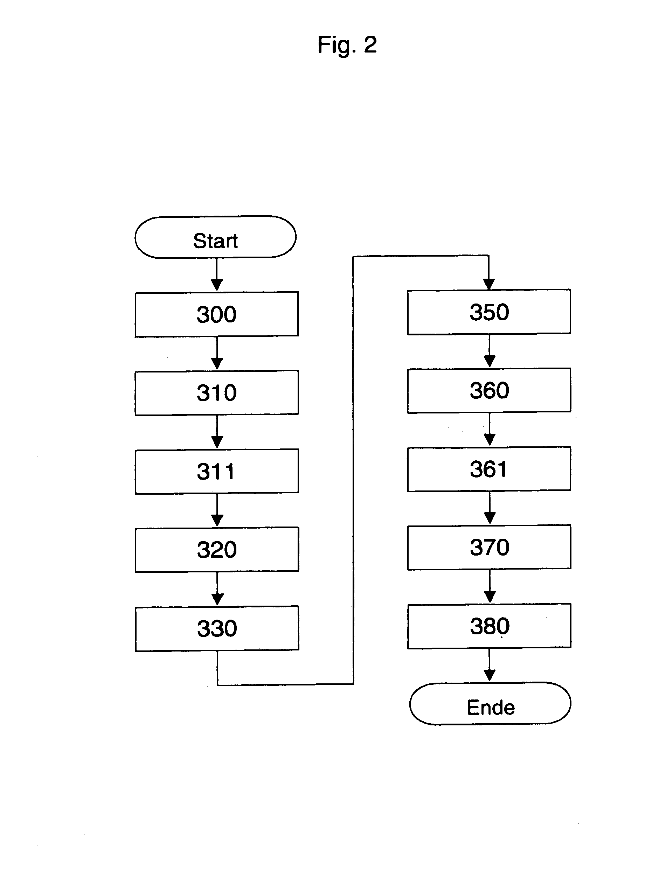

Eine weitere Ausführungsform der vorliegenden Erfindung wird nachfolgend unter Bezugnahme auf das in Fig. 2 abgebildete Flussdiagramm beschrieben.

Bei der Ausführungsform nach Fig. 2 wird in einem ersten Schritt 300 eine erste Frequenz f_1 für das Sendesignal 120a und das Referenzsignal 120b durch geeignete Auswahl der Eingangsspannung U_1 (vgl. Fig. 1) des VCO 110 eingestellt.

Anschließend wird das Sendesignal 120a in dem Schritt 310 von dem Sender 111a in Richtung auf das Zielobjekt 200 (Fig. 1 rechts) abgestrahlt und in dem Schritt 311 von dem Empfänger 111b als Empfangssignal 120c empfangen und in dem Verstärker 112 verstärkt.

In dem Schritt 320 des erfindungsgemäßen Verfahrens wird das verstärkte Empfangssignal 120d und das Referenzsignal 120b durch den Frequenzteiler 113 reduziert, wodurch ein frequenzreduziertes Empfangssignal 120d' und ein frequenzreduziertes Referenzsignal 120b' erhalten werden, die beide eine um den Teilerfaktor x des Frequenzteilers 113 reduzierte Frequenz f_1' = f_1 / x aufweisen.

In dem nächsten in Fig. 2 aufgeführten Schritt 330 sind die bereits beschriebene Analyse der Phasendifferenz zwischen dem frequenzreduzierten Empfangssignal 120d' und dem frequenzreduzierten Referenzsignal 120b' und eine entsprechende Ermittlung des Abstands R zusammengefasst.

Zur weiteren Steigerung der Präzision des erfindungsgemäßen Verfahrens wird anschließend in dem Schritt 350 eine zweite Frequenz f_2, die von der ersten Frequenz f_1 verschieden ist, für das Sendesignal 120a und das Referenzsignal 120b durch geeignete Auswahl der Eingangsspannung U_1 (vgl. Fig. 1) des VCO 110 eingestellt.

Analog zu den Schritten 310 bis 330 wird dann zunächst in dem Schritt 360 das Sendesignal der Frequenz f_2 abgestrahlt und in dem Schritt 361 zumindest teilweise in Form des Empfangssignals 120c empfangen und in dem Verstärker 112 verstärkt. In dem Schritt 370 findet schließlich die erfindungsgemäße Frequenzteilung statt, wodurch nunmehr ein frequenzreduziertes Empfangssignal 120d' und ein frequenzreduziertes Referenzsignal 120b' erhalten werden, die beide eine um den Teilerfaktor x des Frequenzteilers 113 reduzierte Frequenz f_2' = f_2 / x aufweisen.

In dem nächsten in Fig. 2 aufgeführten Schritt 380 sind die bereits beschriebene Analyse der Phasendifferenz zwischen dem frequenzreduzierten Empfangssignal 120d' und dem frequenzreduzierten Referenzsignal 120b' und eine entsprechende Ermittlung des Abstands R zusammengefasst.

Durch die Verwendung von zwei verschiedenen Frequenzen f_1, f_2 für zwei aufeinanderfolgende Abstandsmessungen, was im weiteren Sinn auch als FSK-Prinzip (frequency shift keying, Frequenzumtastung) verstanden werden kann, wird eine eindeutige Bestimmung des Abstands R zu dem Zielobjekt 200 ermöglicht. Generell ist es auch denkbar, mehr als zwei verschiedene Frequenzen bei dem erfindungsgemäßen Verfahren zu verwenden.

Bei einer besonders vorteilhaften Ausführungsform der Erfindung wird das Empfangssignal 120c bzw. das verstärkte Empfangssignal 120d und das Referenzsignal 120b vor einer Frequenzteilung in dem Frequenzteiler 113 in ein Digitalsignal gewandelt, welches nur die beiden Zustände Null und Eins annehmen kann. Die Umwandlung erfolgt hierbei vorzugsweise unter Verwendung eines Schmitt-Triggers oder eines Komparators.

Auf diese Weise kann eine besonders einfache Frequenzteilung unter Beachtung der Phasendifferenz z.B. durch einen Binärzähler erfolgen. Falls der Teilerfaktor x entsprechend groß gewählt wird, ist es auch möglich, das als Digitalsignal vorliegende frequenzreduzierte Empfangssignal 120d' und das ebenfalls als Digitalsignal vorliegende frequenzreduzierte Referenzsignal 120b' direkt einer Recheneinheit 116, z.B. einem schnellen DSP, zuzuführen. In diesem Fall kann der DSP direkt eine Phasendifferenz aus den ihm zugeführten Signalen ermitteln.

Andererseits können auch die als Digitalsignal vorliegenden frequenzreduzierten Signale 120b', 120d' zunächst, wie in Fig. 1 abgebildet, einem Phasenkomparator 114 zugeführt werden, der eine entsprechende Ausgangsspannung 121a bereitstellt, die in der bereits beschriebenen Weise weiterverarbeitet werden kann, um den Abstand R zu ermitteln.

Eine weitere sehr vorteilhafte Ausführungsform der vorliegenden Erfindung sieht vor, dass in der Vorrichtung 100 zur Weiterleitung des Sendesignals 120a und/oder des Empfangssignals 120c, 120d und/oder des Referenzsignals 120b vorgesehene Signalwege bzw. weitere die Signale 120a, 120b, 120c, 120d weiterleitende Komponenten wie z.B. der Verstärker 112 so ausgebildet sind, dass sie eine von dem Abstand R abhängige Phasendifferenz zwischen dem Empfangssignal 120c, 120d und dem Referenzsignal 120b nicht beeinflussen. Damit ist sichergestellt, dass sich eine lokale Leitungsführung in der Vorrichtung 100 zur Weiterleitung der Signale 120a, 120b, 120c, 120d oder auch unterschiedliche Signallaufzeiten in dem Verstärker 112 nicht negativ auf die Genauigkeit bei der Abstandsbestimmung auswirken. Tatsächliche innerhalb der Vorrichtung 100 bestehende unterschiedliche Signalweglängen oder frequenzabhängige Signallaufzeiten in dem Verstärker 112 können auch kompensiert werden, indem sie durch die Recheneinheit 116 bei der Ermittlung des Abstands R berücksichtigt werden.

Im Gegensatz zu herkömmlichen Vorrichtungen, bei denen eine kohärente Demodulation eines Empfangssignals unter Verwendung von Mischern vorgenommen wird, so dass ebenfalls eine Phasendifferenz zwischen einem Sendesignal und einem Empfangssignal auswertbar ist, ist der Aufwand zur Durchführung des erfindungsgemäßen Verfahrens verhältnismäßig gering, da zusätzlich zu den herkömmlichen Komponenten lediglich der erfindungsgemäße Frequenzteiler 113 (Fig. 1) erforderlich ist. Mehrere Oszillatoren bzw. deren Synchronisation sind bei der vorliegenden Erfindung nicht erforderlich, wie dies beim Stand der Technik der Fall ist. Vielmehr kann der elektrisch abstimmbare Oszillator 110 bei der erfindungsgemäßen Vorrichtung 100 frei laufen, d.h. er muss keine vorgegebene, feste Phasenbeziehung zu anderen Oszillatoren oder anderen Bauteilen aufweisen.

Ein weiterer Vorteil der vorliegenden Erfindung besteht darin, dass vor einer Abstandsmessung keine Kalibrierung erforderlich ist.

Darüberhinaus lassen sich mit dem erfindungsgemäßen Verfahren auch Abstände R bestimmen, die sehr viel kleiner sind als eine Wellenlänge der Frequenz f_1, f_2 des Sendesignals. Daher eignet sich das erfindungsgemäße Verfahren insbesondere auch zur Abstandsbestimmung im Kraftfahrzeugbereich, bei dem z.B. unmittelbar um das Kraftfahrzeug herum befindliche Hindernisse erkannt und deren Abstände zu dem Kraftfahrzeug bestimmt werden müssen.

Generell kann das erfindungsgemäße Verfahren bei jedem existierenden Radarsystem eingesetzt werden, das um den erfindungsgemäßen Frequenzteiler erweiterbar ist. Vorhandene Radarsysteme, die eine Frequenzumtastung vorsehen, können ebenfalls zur Durchführung des erfindungsgemäßen Verfahrens verwendet werden.

Ganz besonders vorteilhaft ist der Erfindungsgegenstand insbesondere aufgrund der hohen Ortsauflösung bzw. Ortsgenauigkeit auch bei radarbasierten Systemen zur Abstandsdetektion im Kraftfahrzeugbereich einsetzbar, wie z.B. bei Einparkhilfesystemen, bei Systemen zur Kollisionserkennung und dergleichen.

## Patentansprüche

1. Verfahren zur Bestimmung eines Abstands (R) zu einem Zielobjekt (200), bei dem elektromagnetische Wellen in Form eines Sendesignals (120a) von einem Sender (111a) ausgesandt werden und bei dem mindestens ein Teil des an dem Zielobjekt (200) reflektierten Sendesignals (120a) in Form eines Empfangssignals (120c, 120d) von einem Empfänger (111b) empfangen wird, bei dem eine Auswertung des Empfangssignals (120c, 120d) in Abhängigkeit von einem Referenzsignal (120b) erfolgt, wobei das Referenzsignal (120b) eine bekannte Phasendifferenz zu dem Sendesignal (120a) und dieselbe Frequenz wie das Sendesignal (120a) aufweist, bei dem die Frequenz des Referenzsignals
(120b) und des Empfangssignals (120c, 120d) in einem Frequenzteiler (113) unter Beibehaltung einer zwischen dem Referenzsignal (120b) und dem Empfangssignal (120c, 120d) bestehenden Phasendifferenz um denselben vorgebbaren Teilerfaktor (x) verringert wird, um ein frequenzreduziertes Referenzsignal (120b') und ein frequenzreduziertes Empfangssignal (120d') zu erhalten, und bei dem die Phasendifferenz zwischen dem frequenzreduzierten Referenzsignal (120b') und dem frequenzreduzierten Empfangssignal (120d') ausgewertet wird, um den Abstand (R) zu bestimmen, **dadurch gekennzeichnet, dass** das Empfangssignal (120c, 120d) und/oder das Referenzsignal (120b) vor der Frequenzteilung in dem Frequenzteiler (113) in ein Digitalsignal gewandelt wird unter Verwendung eines Schmitt-Triggers oder eines Komparators.

2. Verfahren nach Anspruch 1, **dadurch gekennzeichnet, dass** das Empfangssignal (120c) verstärkt wird, um ein verstärktes Empfangssignal (120d) zu erhalten, und dass das verstärkte Empfangssignal (120d) dem Frequenzteiler (113) zugeführt wird.

3. Verfahren nach Anspruch 1 oder 2, **dadurch gekennzeichnet, dass** die Frequenzteilung mittels eines Binärzählers erfolgt.

4. Verfahren nach einem der vorstehenden Ansprüche, **dadurch gekennzeichnet, dass** mittels eines Phasenkomparators (114) aus dem frequenzreduzierten Referenzsignal (120b') und dem frequenzreduzierten Empfangssignal (120d') eine zu der Phasendifferenz zwischen dem frequenzreduzierten Referenzsignal (120b') und dem frequenzreduzierten Empfangssignal (120d') proportionale Ausgangsspannung (121a) erhalten wird.

5. Verfahren nach Anspruch 4, **dadurch gekennzeichnet, dass** die Ausgangsspannung (121a) mittels eines Analog-/Digital-Wandlers (115) digitalisiert wird, um eine digitalisierte Ausgangsspannung (121b) zu erhalten.

6. Verfahren nach einem der Ansprüche 4 oder 5, **dadurch gekennzeichnet, dass** die Ausgangsspannung (121a) bzw. die digitalisierte Ausgangsspannung (121b) zur Ermittlung des Abstands (R) einer Recheneinheit (116), insbesondere einem Mikrocontroller oder einem digitalen Signalprozessor, zugeführt wird.

7. Verfahren nach einem der vorstehenden Ansprüche, **dadurch gekennzeichnet, dass** das Sendesignal (120a) und/oder das Referenzsignal (120b) mittels eines elektrisch abstimmbaren Oszillators (110), insbesondere in Abhängigkeit einer dem Oszillator (110) zuführbaren Eingangsspannung (U_1), erzeugt wird.

8. Verfahren nach einem der vorstehenden Ansprüche, **dadurch gekennzeichnet, dass** innerhalb einer zur Abstandsbestimmung verwendeten Vorrichtung (100) auftretende unterschiedliche Weglängen des Sendesignals (120a) und/oder des Empfangssignals (120c, 120d) und/oder des Referenzsignals (120b) und/oder sonstige, insbesondere von einem zur Verstärkung des Empfangssignals (120c) vorgesehenen Verstärker (112) hervorgerufene Laufzeitunterschiede der Signale (120a, 120b, 120c, 120d), kompensiert werden.

9. Verfahren nach einem der vorstehenden Ansprüche, **dadurch gekennzeichnet, dass** nacheinander mehrere Sendesignale (120a) mit unterschiedlichen Frequenzen ausgesandt werden.

10. Vorrichtung (100) zur Bestimmung eines Abstands (R) zu einem Zielobjekt (200), mit einem Sender (111a) zum Aussenden von elektromagnetische Wellen in Form eines Sendesignals (120a) und einem Empfänger (111b) zum Empfangen mindestens eines Teils des an dem Zielobjekt (200) reflektierten Sendesignals (120a) in Form eines Empfangssignals (120c, 120d), bei der eine Auswertung des Empfangssignals (120c, 120d) in Abhängigkeit von einem Referenzsignal (120b) durchführbar ist, wobei das Referenzsignal (120b) eine bekannte Phasendifferenz zu dem Sendesignal (120a) und dieselbe Frequenz wie das Sendesignal (120a) aufweist, und bei der des Weiteren ein Frequenzteiler (113) vorgesehen ist, der die Frequenz des Referenzsignals (120b) und des Empfangssignals (120c, 120d) unter Beibehaltung einer zwischen dem Referenzsignal (120b) und dem Empfangssignal (120c, 120d) bestehenden Phasendifferenz um denselben vorgebbaren Teilerfaktor (x) verringert, um ein frequenzreduziertes Referenzsignal (120b') und ein frequenzreduziertes Empfangssignal (120d') zu erhalten, **gekennzeichnet durch** eine Vorrichtung zur Wandlung des Empfangssignals (120c, 120d) und/oder das Referenzsignals (120b), vor der Frequenzteilung, in ein Digitalsignal, wobei die Vorrichtung zur Wandlung des Empfangssignals (120c, 120d) und/oder das Referenzsignals (120b) in ein Digitalsignal als Schmitt-Trigger oder als Komparator ausgebildet ist.

11. Vorrichtung (100) nach Anspruch 10, **dadurch gekennzeichnet, dass** der Frequenzteiler (113) als Binärzähler ausgebildet ist.

12. Vorrichtung (100) nach einem der Ansprüche 10 bis 11, **gekennzeichnet durch** einen Phasenkomparator (114).

13. Vorrichtung (100) nach einem der Ansprüche 10 bis 12, **gekennzeichnet durch** einen insbesondere zur Erzeugung des Sendesignals (120a) und/oder des Referenzsignals (120b) vorgesehenen elektrisch abstimmbaren Oszillator (110).

14. Vorrichtung (100) nach einem der Ansprüche 10 bis 13, **gekennzeichnet durch** eine Recheneinheit (116), wobei die Recheneinheit (116) insbesondere als Mikrocontroller oder als digitaler Signalprozessor, DSP, ausgebildet ist.

15. Vorrichtung (100) nach einem der Ansprüche 10 bis 14, **dadurch gekennzeichnet, dass** der Sender (111a) und/oder der Empfänger (111b) eine Hornantenne oder eine Patchantenne aufweisen.

16. Vorrichtung (100) nach einem der Ansprüche 10 bis 15, **dadurch gekennzeichnet, dass** in der Vorrichtung (100) zur Weiterleitung des Sendesignals (120a) und/oder des Empfangssignals (120c, 120d) und/oder des Referenzsignals (120b) vorgesehene Signalwege bzw. weitere die Signale (120a, 120b, 120c, 120d) weiterleitende Komponenten so ausgebildet sind, dass sie eine von dem Abstand (R) abhängige Phasendifferenz zwischen dem Empfangssignal (120c, 120d) und dem Referenzsignal (120b) nicht beeinflussen.

## Claims

1. Method for determining a distance (R) to a target object (200), in which the electromagnetic waves in the form of a transmit signal (120a) are emitted by a transmitter (111a), and in which at least a part of the transmit signal (120a) reflected at the target object (200) is received in a form of a receive signal (120c, 120d) by a receiver (111b), in which an evaluation of the receive signal (120c, 120d) is performed as a function of a reference signal (120b), the reference signal (120b) having a known phase distance relative to the transmit signal (120a) and having the same frequency as the transmit signal (120a), in which the frequency of the reference signal (120b) and of the receive signal (120c, 120d) is reduced in a frequency divider (113) by maintaining a phase difference existing between the reference signal (120b) and the receive signal (120c, 120d), by the same prescribable divider factor (x) in order to obtain a frequency-reduced reference signal (120b') and a frequency-reduced receive signal (120d'), and in which the phase difference between the frequency-reduced reference signal (120b') and the frequency-reduced receive signal (120d') is evaluated in order to determine the distance (R), **characterized in that** the receive signal (120c, 120d) and/or the reference signal (120b) are/is converted into a digital signal before the frequency division in the frequency divider (113) by making use of a Schmitt trigger or a comparator.

2. Method according to Claim 1, **characterized in that** the receive signal (120c) is amplified in order to obtain an amplified receive signal (120d), and **in that** the amplified receive signal (120d) is fed to the frequency divider (113).

3. Method according to Claim 1 or 2, **characterized in that** the frequency division is performed by means of a binary counter.

4. Method according to one of the preceding claims, **characterized in that** an output voltage (121a) proportional to the phase difference between the frequency-reduced reference signal (120b') and the frequency-reduced receive signal (120d') is obtained by means of a phase comparator (114) from the frequency-reduced reference signal (120b') and the frequency-reduced receive signal (120d').

5. Method according to Claim 4, **characterized in that** the output voltage (121a) is digitized by means of an analogue-to-digital converter (115) in order to obtain a digitized output voltage (121b).

6. Method according to either of Claims 4 and 5, **characterized in that** the output voltage (121a) or the digitized output voltage (121b) is fed to an arithmetic logic unit (116), in particular a microcontroller or a digital signal processor, in order to determine the distance (R).

7. Method according to one of the preceding claims, **characterized in that** the transmit signal (120a) and/or the reference signal (120b) is produced by means of an electrically tuneable oscillator (110), in particular as a function of an input voltage (U_1) which can be fed to the oscillator (110).

8. Method according to one of the preceding claims, **characterized in that** different path lengths of the transmit signal (120a) and/or of the receive signal (120c, 120d) and/or of the reference signal (120b) and/or other propagation time differences, caused in particular by an amplifier (112) provided to amplify the receive signal (120c), of the signals (120a, 120b, 120c, 120d), are compensated within a device (100) used for distance determination.

9. Method according to one of the preceding claims, **characterized in that** a plurality of transmit signals (120a) having different frequencies are emitted consecutively.

10. Device (100) for determining a distance (R) to a target object (200), having a transmitter (111a) for emitting electromagnetic waves in the form of a transmit signal (120a) and a receiver (111b) for receiving at least a part of the transmit signal (120a), reflected at the target object (200), in the form of a receive signal (120c, 120d), in which it is possible to carry out an evaluation of the receive signal (120c, 120d) as a function of a reference signal (120b), the reference signal (120b) having a known phase difference relative to the transmit signal (120a) and the same frequency as the transmit signal (120a), and in which there is furthermore provided a frequency divider (113) which reduces the frequency of the reference signal (120b) and of the receive signal (120c, 120d) while maintaining a phase difference existing between the reference signal (120b) and the receive signal (120c, 120d) by the same prescribable divider factor (x) in order to obtain a frequency-reduced reference signal (120b) and a frequency-reduced receive signal (120d'), **characterized by** a device for converting the receive signal (120c, 120d) and/or the reference signal (120b), upstream of the frequency division, into a digital signal, the device for converting the receive signal (120c, 120d) and/or the reference signal (120b) into a digital signal being designed as a Schmitt trigger or as a comparator.

11. Device (100) according to Claim 10, **characterized in that** the frequency divider (113) is designed as a binary counter.

12. Device (100) according to either of Claims 10 or 11, **characterized by** a phase comparator (114).

13. Device (100) according to one of Claims 10 to 12, **characterized by** an electrically tuneable oscillator (110) provided, in particular, to produce the transmit signal (120a) and/or the reference signal (120b).

14. Device (100) according to one of Claims 10 to 13, **characterized by** an arithmetic logic unit (116), the arithmetic logic unit (116) being designed, in particular, as a microcontroller or as a digital signal processor, DSP.

15. Device (100) according to one of Claims 10 to 14, **characterized in that** the transmitter (111a) and/or the receiver (111b) have a horn antenna or a patch antenna.

16. Device (100) according to one of Claims 10 to 15, **characterized in that** signal paths provided in the device (100) in order to pass on the transmit signal (120a) and/or the receive signal (120c, 120d) and/or the reference signal (120b), and/or further components passing on the signals (120a, 120b, 120c, 120d) are designed so that they do not influence a phase difference between the receive signal (120c, 120d) and the reference signal (120b) which is dependent on the distance (R).

## Revendications

1. Procédé de détermination d'une distance (R) d'un objet cible (200), dans lequel des ondes électromagnétiques sont émises sous la forme d'un signal d'émission (120a) par un émetteur (111a) et dans lequel au moins une partie du signal d'émission (120a) sur l'objet cible (200) est reçue sous la forme d'un signal de réception (120c, 120d) par un récepteur (111b), dans lequel une évaluation du signal de réception (120c, 120d) est effectuée en fonction d'un signal de référence (120b), le signal de référence (120b) présentant une différence de phase connue par rapport au signal d'émission (120a) et la même fréquence que le signal d'émission (120a), dans lequel la fréquence du signal de référence (120b) et du signal de réception (120c, 120d) est abaissée d'un même facteur de division (x) pouvant être prédéterminé dans un diviseur de fréquence (113) tout en conservant une différence de phase existant entre le signal de référence (120b) et le signal de réception (120c, 120d), afin d'obtenir un signal de référence à fréquence réduite (120b') et un signal de réception à fréquence réduite (120d'), et dans lequel la différence de phase entre le signal de référence à fréquence réduite (120b') et le signal de réception à fréquence réduite (120d') est évaluée afin de déterminer la distance (R), **caractérisé en ce que** le signal de réception (120c, 120d) et/ou le signal de référence (120b) est converti en un signal numérique avant la division de fréquence dans le diviseur de fréquence (113) par utilisation d'un trigger de Schmitt ou d'un comparateur.

2. Procédé selon la revendication 1, **caractérisé en ce que** le signal de réception (120c) est amplifié afin d'obtenir un signal de réception amplifié (120d), et **en ce que** le signal de réception amplifié (120d) est délivré au diviseur de fréquence (113).

3. Procédé selon la revendication 1 ou 2, **caractérisé en ce que** la division de fréquence s'effectue au moyen d'un compteur binaire.

4. Procédé selon l'une quelconque des revendications précédentes, **caractérisé en ce qu'**une tension de sortie (121a) proportionnelle à la différence de phase entre le signal de référence à fréquence réduite (120b') et le signal de réception à fréquence réduite (120d') est obtenue au moyen d'un comparateur de phase (114) à partir du signal de référence à fréquence réduite (120b') et du signal de réception à fréquence réduite (120d').

5. Procédé selon la revendication 4, **caractérisé en ce que** la tension de sortie (121a) est numérisée au moyen d'un convertisseur analogique-numérique (115) afin d'obtenir une tension de sortie numérisée (121b).

6. Procédé selon l'une quelconque des revendications 4 ou 5, **caractérisé en ce que** la tension de sortie (121a) ou la tension de sortie numérisée (121b) est délivrée à une unité de calcul (116), notamment à un microcontrôleur ou à un processeur de signaux numériques pour déterminer la distance (R).

7. Procédé selon l'une quelconque des revendications précédentes, **caractérisé en ce que** le signal d'émission (120a) et/ou le signal de référence (120b) est généré au moyen d'un oscillateur accordable électriquement (110), notamment en fonction d'une tension d'entrée (U_1) pouvant être délivrée à l'oscillateur (110).

8. Procédé selon l'une quelconque des revendications précédentes, **caractérisé en ce que** des longueurs de trajet différentes qui se produisent, du signal d'émission (120a) et/ou du signal de réception (120c, 120d) et/ou du signal de référence (120b) et/ou diverses différences de temps de propagation des signaux (120a, 120b, 120c, 120d) notamment provoquées par un amplificateur (112) prévu pour amplifier le signal de réception (120c), sont compensées dans un dispositif (100) utilisé pour déterminer la distance.

9. Procédé selon l'une quelconque des revendications précédentes, **caractérisé en ce que** de multiples signaux d'émission (120a) sont émis les uns à la suite des autres avec des fréquences différentes.

10. Dispositif (100) destiné à déterminer une distance (R) d'un objet cible (200), comportant un émetteur (111a) destiné à émettre des ondes électromagnétiques sous forme d'un signal d'émission (120a) et un récepteur (111b) destiné à recevoir au moins une partie des signaux d'émission (120a) réfléchis sur l'objet cible (200) sous la forme d'un signal de réception (120c, 120d), dans lequel une évaluation du signal de réception (120c, 120d) peut être effectuée en fonction d'un signal de référence (120b), le signal de référence (120b) présentant une différence de phase connue par rapport au signal d'émission (120a) et la même fréquence que le signal d'émission (120a), et dans lequel il est en outre prévu un diviseur de fréquence (113) qui réduit du même facteur de division pouvant être prédéterminé (x) la fréquence du signal de référence (120b) et du signal de réception (120c, 120d) tout en conservant une différence de phase existant entre le signal de référence (120b) et le signal de réception (120c, 120d), afin d'obtenir un signal de référence à fréquence réduite (120b') et un signal de réception à fréquence réduite (120d'), **caractérisé par** un dispositif destiné à convertir le signal de réception (120c, 120d) et/ou le signal de référence (120b), avant la division de fréquence, en un signal numérique, dans lequel le dispositif destiné à convertir le signal de réception (120c, 120d) et/ou le signal de référence (120b) en un signal numérique est réalisé sous la forme d'un trigger de Schmitt ou d'un comparateur.

11. Dispositif (100) selon la revendication 10, **caractérisé en ce que** le diviseur de fréquence (113) est réalisé sous la forme d'un compteur binaire.

12. Dispositif (100) selon l'une quelconque des revendications 10 à 11, **caractérisé par** un comparateur de phase (114).

13. Dispositif (100) selon l'une quelconque des revendications 10 à 12, **caractérisé par** un oscillateur (110) accordable électriquement prévu pour générer le signal d'émission (120a) et/ou le signal de référence (120b).

14. Dispositif (100) selon l'une quelconque des revendications 10 à 13, **caractérisé par** une unité de calcul (116), dans lequel l'unité de calcul (116) est notamment réalisée sous la forme d'un microcontrôleur ou d'un processeur de signaux numériques, DSP.

15. Dispositif (100) selon l'une quelconque des revendications 10 à 14, **caractérisé en ce que** l'émetteur (111a) et/ou le récepteur (111b) comprennent une antenne cornet ou une antenne plaquée.

16. Dispositif (100) selon l'une quelconque des revendications 10 à 15, **caractérisé en ce que** des trajets de signaux prévus ou d'autres composants réacheminant les signaux (120a, 120b, 120c, 120d) dans le dispositif (100) pour réacheminer le signal d'émission (120a) et/ou le signal de réception (120c, 120d) et/ou le signal de référence (120b) sont réalisés de manière à ne pas affecter une différence de phase dépendant de la distance (R) entre le signal de réception (120c, 120d) et le signal de référence (120b).
